# EUROPÄISCHE PATENTSCHRIFT

(11) **EP 2 667 267 B1**
(45) Veröffentlichungstag und Bekanntmachung des Hinweises auf die Patenterteilung: **11.12.2019**
(21) Anmeldenummer: 13002609.9
(22) Anmeldetag: 17.05.2013
(51) Int. Cl.: G05B 19/00, G05B 19/042

(54) **Analogsignal-Ausgangsschaltung mit einer Anzahl von Analogsignal-Ausgabekanälen**
Output circuit for analog signal with a plurality of analog signal output channels.
Circuit de sortie pour signal analogique avec plusieurs canaux de sortie pour signal analogique

(30) Priorität: 24.05.2012 DE 102012010144
(43) Veröffentlichungstag der Anmeldung: 27.11.2013
(73) Patentinhaber: PHOENIX CONTACT GmbH & Co. KG, 32825 Blomberg (DE)
(72) Erfinder: Oster, Viktor, 32825 Blomberg (DE); Lohre, Hubertus, 32839 Steinheim (DE)
(74) Vertreter: Bill, Burkart Hartmut

(56) Entgegenhaltungen:
- DE-A1- 10 035 174

## Beschreibung

Die Verwendung von analogen Ausgangsgrößen ist besonders in der Prozessindustrie stark verbreitet, wie z.B. bei 4mA bis 20mA Schnittstellen für Stellglieder, wie z.B. Rauchgasklappen und Ventilsteuerungen. Viele dieser Signale dienen der Prozesssteuerung und sind daher häufig für die Sicherheit des Prozesses von entscheidender Relevanz.

Im Unterschied zu digitalen Signalen, ist die Analogtechnik jedoch sehr aufwändig.

Insbesondere die Anforderungen der Sicherheitsnorm DIN EN 91508 an die Diagnosedeckung für höhere Sicherheitsintegritätslevel (z.B. SIL2 oder SIL3) zum Zeitpunkt der vorliegenden Anmeldung sind jedoch weiterhin nur mit Signalverarbeitungsstrukturen von einem enormen Schaltungsaufwand möglich.

In der Regel haben derartige Signalverarbeitungsstrukturen und Diagnosezenarien hierfür jedoch typischerweise als Nachteil, dass Testeinheiten die Signalverarbeitungsstrukturen sicherheitsrelevant beeinflussen können, dass ein Nachweis über die Rückwirkungsfreiheit mit sehr großem Aufwand verbunden ist, dass die Diagnosedeckung der Testeinheit eingeschränkt ist, Testimpulse einer Diagnoseeinheit oft nach außen sichtbar sind und den Prozess stören können und/oder, dass während des Testens die betroffenen Signalverarbeitungsstrukturen nur bedingt einsatzbereit sind bzw. die Sicherheitsfunktion für die Testzeit ausgeblendet werden muss.

DE 1035174 A1 beschreibt einen Peripheriebaustein mit hoher Fehlersicherheit für speicherprogrammierbare Steuerungen, insbesondere Analogeingabe-Schaltungen.

Aufgabe der Erfindung ist es, eine flexible, geräteunabhängige und günstige Lösung zur Realisierung einer Analogsignal-Ausgangsschaltung zur Ausgabe von analogen Ausgangssignalen, insbesondere von für die Sicherheit eines Prozesses relevanten analogen Ausgangssignalen aufzuzeigen, welche einen hohen Sicherheitsintegritätslevel auch bei Diagnose- oder Testszenarien bereitstellt.

Die Erfindung löst diese Aufgabe durch die Merkmale der unabhängigen Patentansprüche. Zweckmäßige Ausgestaltungen und Weiterbildungen sind Gegenstand der abhängigen Ansprüche.

Dementsprechend sieht eine Lösung der Erfindung eine Analogsignal-Ausgangsschaltung mit einer ersten Anzahl von Analogsignal-Ausgabekanälen und zumindest einer Diagnoseschaltung vor. Jeder Analogsignal-Ausgabekanal ist ausgebildet, ansprechend auf ein erfasstes Eingangssignal ein analoges Ausgangssignal an einem analogen Signalausgang aus einer zweiten Anzahl von analogen Signalausgängen auszugeben. Jeder Analogsignal-Ausgabekanal beherbergt jeweils zwei Analogsignal-Ausgabeschaltungen und zumindest eine erste Verbindungsauswahlvorrichtung. Jede Analogsignal-Ausgabeschaltung besitzt eine erste Anschlusseinrichtung und eine zweite Anschlusseinrichtung. Jede der Analogsignal-Ausgabeschaltungen eines Analogsignal-Ausgabekanals ist mit deren erster Anschlusseinrichtung mit demselben analogen Signalausgang aus der zweiten Anzahl von analogen Signalausgängen zur Ausgabe eines analogen Ausgangssignalsignals zeitlich nacheinander verbindbar und beide Analogsignal-Ausgabeschaltungen eines Analogsignal-Ausgabekanals sind ausgebildet, ansprechend auf einander entsprechende, an deren zweiten Anschlusseinrichtungen anliegenden, erfasste Eingangssignale einander entsprechende Ausgangssignale auszugeben. Je Analogsignal-Ausgabekanal ist für die Erfassung des Eingangssignal und für die auf das erfasste Eingangssignal ansprechende Ausgabe des analogen Ausgangssignals an einem analogen Signalausgang aus der zweiten Anzahl von analogen Signalausgängen jeweils eine der zwei beherbergten Analogsignal-Ausgabeschaltungen für einen bestimmbaren Zeitraum wechselnd ausgewählt, nicht mit deren erster Anschlusseinrichtung mit diesem analogen Signalausgang zur Ausgabe dieses analogen Ausgangssignals verbunden zu werden, sondern für Test- und/oder Diagnosezwecke verwendet zu werden und die jeweils andere der zwei beherbergten Analogsignal-Ausgabeschaltungen ist für diesen bestimmbaren Zeitraum ausgewählt, mit deren erster Anschlusseinrichtung mit diesem analogen Signalausgang zur Ausgabe dieses analogen Ausgangssignals verbunden zu werden und ansprechend auf das, an deren zweiter Anschlusseinrichtung erfasste Eingangssignal als Ausgangssignal das Ausgangssignal des Analogsignal-Ausgabekanals auszugeben, wobei die erste Verbindungsauswahlvorrichtung hierzu ausgebildet ist, die jeweilige erste Anschlusseinrichtung der zwei beherbergten Analogsignal-Ausgabeschaltungen ansprechend auf die Auswahl zumindest entweder mit diesem zu verbindenden analogen Signalausgang oder mit der Diagnoseschaltung zu verbinden.

Ferner sieht die Erfindung vor, dass jeder Analogsignal-Ausgabekanal eine zweite Verbindungsauswahlvorrichtung besitzt, welche ausgebildet ist, in Abstimmung mit der ersten Verbindungsauswahlvorrichtung die zweiten Anschlusseinrichtungen entsprechend ausgewählt mit einer für die vorherige Verarbeitung des Eingangssignals des Analogsignal-Ausgabekanals vorgesehenen Verarbeitungsvorrichtung oder mit der Diagnoseschaltung zu verbinden.

Ein wesentlicher Vorteil hierbei ist, dass die Analogsignal-Ausgabeschaltungen je Analogsignal-Ausgabekanal und je nach Bedarf für einen bestimmbaren Zeitraum mittels der Diagnoseschaltung Test- und/oder Diagnosezwecken unterworfen werden können, ohne dass hierbei eine einem Test und/oder einer Diagnose zu unterwerfende Analogsignal-Ausgabeschaltungen während der Diagnose innerhalb der Verarbeitungskette des Analogsignal-Ausgabekanals zur Ausgabe von, von dem Analogsignal-Ausgabekanal verarbeiteten Ausgangssignalen vorgesehen ist, und sich also auch nicht in einer Sicherheitskette eines unter Nutzung des Analogsignal-Ausgabekanals zu steuernden Prozesses befindet. Es können somit auch Überprüfungen vorgenommen werden, die bei der Verarbeitung durch den Analogsignal-Ausgabekanal, und folglich auch im Betrieb einer den Analogsignal-Ausgabekanal umfassenden Sicherheitskette nicht zulässig wären. Ferner können während der Diagnose auch an den Signalausgängen keine sichtbaren Diagnosesignale anliegen. Jegliche Diagnose beeinträchtigt folglich die vollständige hundertprozentige Funktion des Analogsignal-Ausgabekanals nicht. Die Erfindung ermöglicht somit insbesondere in Hinblick auf die Anforderungen in der Prozessindustrie eine hohe Verfügbarkeit.

Die erste Verbindungsauswahlvorrichtung kann hierbei Analogschalteinheiten umfassen, wobei in jeder Analogsignal-Ausgabeschaltung zweckmäßig jeweils eine Analogschalteinheit beherbergt ist.

Besitzt die erfindungsgemäße Analogsignal-Ausgangsschaltung aufgrund höherer Sicherheitsintegritätslevel eine Anzahl von wenigsten zwei Analogsignal-Ausgabekanälen, die z.B. auch redundant betrieben werden können oder zu einem Redundanzblock zusammenschaltbar sind, ergibt sich darüber hinaus der Vorteil, dass lediglich stets die selben Analogsignal-Ausgabeschaltungen gegenseitig ausgetauscht sind und also stets eine dieser beiden in die Verarbeitungskette des selben Analogsignal-Ausgabekanal eingebunden ist, während stets die andere zu Diagnosezwecken mit der derselben Diagnoseschaltung verbunden sein kann. Da für die Analogsignal-Ausgabeschaltungen, den Analogsignal-Ausgabekanal und die Diagnoseschaltung folglich stets die gleichen Umgebungsbedingungen in Bezug auf jeweils angeschaltete bzw. eingebundene Verarbeitungskomponenten gewährleistet werden können, können mögliche Signalabweichungen zwischen den beiden Analogsignal-Ausgabeschaltungen oder auch Fehler innerhalb einer Analogsignal-Ausgabeschaltung somit wesentlich einfacher diagnostiziert werden.

Der Erfindung liegt folglich die Erkenntnis zugrunde, dass bei der Bereitstellung von analogen Ausgangsgrößen, wie z.B. Stellgrößen für Rauchgasklappen und Ventilsteuerungen, entsprechenden analogen Ausgangssignalen, insbesondere in der Prozessindustrie und insbesondere im Falle von analogen Ausgangssignalen, die für die Sicherheit eines Prozesses von entscheidender Relevanz sind, die Funktionalität eines Analogsignal-Ausgabekanals einer Analogsignal-Ausgangsschaltung, und folglich auch der sichere Betrieb einer den Analogsignal- Ausgabekanals umfassenden Sicherheitskette nicht nur nicht beeinträchtigt wird, sondern darüber hinaus parallel deren hundertprozentige Funktion nahezu vollständig überwacht werden kann, wenn jeweils zwei Analogsignal-Ausgabeschaltungen in einem Analogsignal-Ausgabekanal vorgesehen sind, von denen eine für die hundertprozentige Funktionalität des Analogsignal-Ausgabekanals überzählig ist und somit jeweils eine Analogsignal-Ausgabeschaltung einer solchen Analogsignal-Ausgangsschaltung für diverse Diagnosezwecken sowie zum Austausch der jeweilig anderen Analogsignal-Ausgabeschaltung zur Verfügung steht, so dass diese daraufhin für diverse Diagnosezwecken zur Verfügung steht.

Das erfindungsgemäße Konzept basiert somit ferner darauf, innerhalb jedem Analogsignal-Ausgabekanal eine zumindest zweifache Redundanz von sicherheitsrelevanten Elementen bereitzustellen, obgleich die Funktionalität eines jeden einzelnen Analogsignal-Ausgabekanals keine zwingende redundante Verarbeitung vorsieht, sondern gegebenenfalls erst zwei oder mehr Analogsignal-Ausgabekanäle redundant betrieben werden können oder zu einem Redundanzblock zusammenschaltbar sind.

Es sei darauf hingewiesen, dass auch eine Anzahl von einem analogen Signalausgang oder auch von mehr als zwei analogen Signalausgängen von der Formulierung "eine Anzahl von analogen Signalausgängen" bzw. "eine zweite Anzahl von analogen Signalausgängen" in den Ansprüchen sowie der Beschreibung umfasst sein soll, so dass die Anzahl zumindest 1 ist und ansonsten im Wesentlichen beliebig groß sein kann.

So sieht eine weitere, insbesondere zur Ausgabe von häufiger zu aktualisierenden analogen Ausgangssignalen bzw. zur Ausgabe von zeitkritischen analogen Ausgangssignalen, bevorzugte Lösung der Erfindung vor, dass jeder Analogsignal-Ausgabekanal ausgebildet ist, ansprechend auf erfasste Eingangssignale an einer zweiten Anzahl von wenigstens zwei analogen Signalausgängen analoge Ausgangssignale auszugeben, wobei jeder Analogsignal-Ausgabekanal jeweils eine dritte Anzahl von Analogsignal-Ausgabeschaltungen und zumindest eine erste Verbindungsauswahlvorrichtung beherbergt und wobei die dritte Anzahl wenigstens drei beträgt und maximal um eins größer als die zweite Anzahl ist. Jede Analogsignal-Ausgabeschaltung besitzt eine erste Anschlusseinrichtung und eine zweite Anschlusseinrichtung und jede der Analogsignal-Ausgabeschaltungen eines Analogsignal-Ausgabekanals ist mit deren erster Anschlusseinrichtung mit jeweils einem analogen Signalausgang aus der zweiten Anzahl von analogen Signalausgängen zur Ausgabe eines analogen Ausgangssignals verbindbar, wobei jede der Analogsignal-Ausgabeschaltungen eines Analogsignal-Ausgabekanals mit deren erster Anschlusseinrichtung mit demselben analogen Signalausgang aus der zweiten Anzahl von analogen Signalausgängen zur Ausgabe eines analogen Ausgangssignals zeitlich nacheinander verbindbar ist und alle der dritten Anzahl von Analogsignal-Ausgabeschaltungen eines Analogsignal-Ausgabekanals ausgebildet sind, ansprechend auf, an deren zweiten Anschlusseinrichtungen anliegende, erfasste, einander entsprechende Eingangssignale einander entsprechende Ausgangssignale auszugeben. Je Analogsignal-Ausgabekanal ist für die Erfassung von Eingangssignalen und für die auf die erfassten Eingangssignale ansprechenden Ausgaben der analogen Ausgangssignale an Signalausgängen aus der zweiten Anzahl von analogen Signalausgängen jeweils eine Analogsignal-Ausgabeschaltung für einen bestimmbaren Zeitraum wechselnd ausgewählt, nicht mit deren erster Anschlusseinrichtung mit einem analogen Signalausgang zur Ausgabe eines analogen Ausgangssignals verbunden zu werden, sondern für Test- und/oder Diagnosezwecke verwendet zu werden, und alle bis auf diese eine der dritten Anzahl von beherbergten Analogsignal-Ausgabeschaltungen sind jeweils für diesen bestimmten Zeitraum ausgewählt, mit deren ersten Anschlusseinrichtungen mit bestimmten analogen Signalausgängen aus der zweiten Anzahl von analogen Signalausgängen zur Ausgabe von analogen Ausgangssignalen verbunden zu werden und ansprechend auf die, an deren zweiten Anschlusseinrichtungen erfassten Eingangssignale als Ausgangssignale die Ausgangssignale des Analogsignal-Ausgabekanals auszugeben, wobei die erste Verbindungsauswahlvorrichtung hierzu ausgebildet ist, die jeweiligen ersten Anschlusseinrichtungen aller beherbergten Analogsignal-Ausgabeschaltungen ansprechend auf die Auswahl zumindest entweder mit einem bestimmten zu verbindenden analogen Signalausgang oder mit der Diagnoseschaltung zu verbinden.

Besonders zweckmäßige Ausgestaltungen sehen vor, dass zumindest ein Analogsignal-Ausgabekanal zur Verarbeitung auch von digitalen Signalen ausgebildet ist und jede Analogsignal-Ausgabeschaltung dieses Analogsignal-Ausgabekanals einen Digital/Analog-Wandler beherbergt, dessen digitaler Signalanschluss an die jeweilige zweite Anschlusseinrichtung geschaltet ist und dessen analoger Signalanschluss zur ersten Verbindungsauswahleinrichtung geschaltet ist.

Besonders zweckmäßige Ausgestaltungen sehen ergänzend oder alternativ ferner vor, dass die zweite Verbindungsauswahlvorrichtung derart ausgebildet ist, so dass eine Verbindung einer jeweiligen zweiten Anschlusseinrichtung zur Erfassung eines Eingangssignals auch mit der Diagnoseschaltung, mit wenigstens einer Referenzspannung oder mit wenigstens einer Versorgungsspannung eines Peripherieeinrichtung auswählbar ist.

Besonders zweckmäßige Ausgestaltungen sehen ergänzend oder alternativ ferner vor, dass die Analogsignal-Ausgabeschaltung eine analoge Treiberstufe beherbergt und/oder, dass zumindest ein analoger Signalausgang zusätzlich zu einer Ausgangsklemme eine Ausgangsschutzschaltung und/oder eine passive Signalanpassungseinheit besitzt.

Weitere Merkmale und Vorteile der Erfindung ergeben sich aus der nachfolgenden Beschreibung bevorzugter Ausführungsformen anhand der beigefügten Zeichnungen. In den Zeichnungen zeigen:
- Fig. 1: eine erste bevorzugte und besonders zweckmäßige Ausgestaltungen aufweisende Ausführungsform einer Analogsignal-Ausgangsschaltung mit lediglich einem Analogsignal-Ausgabekanal,
- Fig. 2: eine weitere bevorzugte und besonders zweckmäßige Ausgestaltungen aufweisende Ausführungsform einer Analogsignal-Ausgangsschaltung mit zwei Analogsignal-Ausgabekanälen, und
- Fig. 3: eine Skizze einer weiteren auf Fig. 1 basierenden Ausführungsform einer Analogsignal-Ausgangsschaltung mit lediglich einem Analogsignal-Ausgabekanal, jedoch insbesondere zur häufigeren Ausgabe von bestimmten analogen Ausgangssignalen bzw. zur Ausgabe von zeitkritischen analogen Ausgangssignalen.

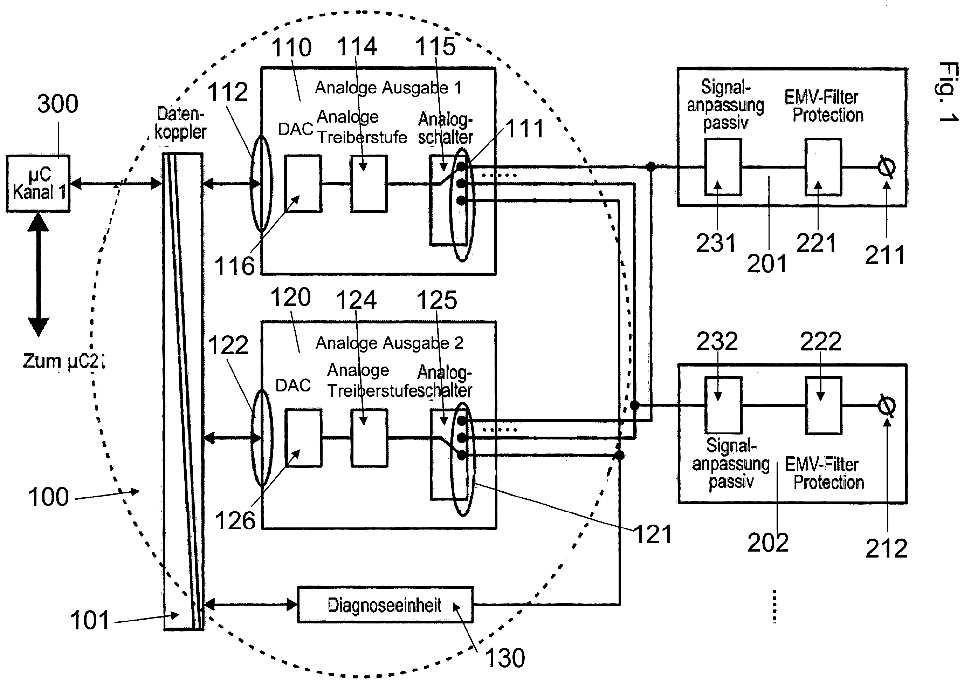

Bezug nehmend zunächst auf Fig. 1, ist eine Analogsignal-Ausgangsschaltung mit einer ersten Anzahl von einem Analogsignal-Ausgabekanal 100, der eine Anzahl von zwei Analogsignal-Ausgabeschaltungen 110 und 120 und zumindest eine Diagnoseschaltung 130 besitzt, stark vereinfacht dargestellt.

Da die einzelnen Unterfunktionen einer Analogsignal-Ausgabeschaltung bisher nur mit einem sehr hohen Aufwand diagnostiziert werden können und unter Umständen keine rückwirkungsfreie Diagnose möglich ist, werden auch nach den vorgeschlagenen Lösungen zur Analogsignalausgabe zweckmäßig schon bewährte Analogschaltungskomponenten verwendet, wobei die Analogausgänge, wie nachfolgend aufgezeigt durch die erfindungsgemäßen Lösungen so miteinander verschaltet sind, dass die Gesamtschaltung nahezu zu 100% getestet werden kann und die Analogschaltungskomponenten somit auch für die Verwendung in der Sicherheitstechnik geeignet sind. Hierzu ist zusätzlich zu den Analogsignal-Ausgabeschaltungen eine Diagnoseschaltung vorgesehen, die zweckmäßig so ausgeprägt ist, dass sie in der Lage ist, alle Signale zur Verfügung zu stellen, die für den vollständigen Test der Analogsignal-Ausgabeschaltungen notwendig sind. Der innere Aufbau dieser Analogsignal-Ausgabeschaltungen kann daher grundsätzlich wie bei Standard Analogmodulen implementiert sein, wobei die notwendige Diagnosedeckung durch die Diagnoseschaltung sichergestellt wird.

Dargestellt ist bei Fig. 1 ferner eine Anzahl von analogen Signalausgängen, gemäß Fig. 1 eine Anzahl von zwei analogen Signalausgängen 201 und 202. Es sei darauf hingewiesen, dass auch eine Anzahl von einem analogen Signalausgang oder auch von mehr als zwei analogen Signalausgängen von der Formulierung "eine Anzahl von analogen Signalausgängen" bzw. "eine zweite Anzahl von analogen Signalausgängen" vorgesehen sein kann und dementsprechend von den Ansprüchen umfasst ist, so dass die Anzahl zumindest 1 ist und ansonsten im Wesentlichen beliebig groß sein kann.

Für die nachfolgende Beschreibung der Ausführungsform nach Fig. 1 wird davon ausgegangen, dass an zumindest einem Signalausgang 201 oder 202 ein einer analogen Ausgangsgröße, wie z.B. Stellgrößen für Rauchgasklappen oder Ventilsteuerungen, entsprechendes analoges Ausgangsignal auszugeben ist, welches vorzugsweise in der Prozessindustrie zur Prozessüberwachung und/oder -steuerung dient und daher in zweckmäßiger Anwendung der Erfindung davon ausgegangen werden kann, dass ein solches analoges Ausgangsignal für die Sicherheit des zu überwachenden oder zu steuernden, nicht näher dargestellten Prozesses, in der Regel von entscheidender Relevanz ist.

Wie ferner der Fig. 1 zu entnehmen, besitzt der Signalausgang 201 eine Ausgangsklemme 211, und in zweckmäßiger Ausgestaltung ferner eine der Ausgangsklemme 211 elektrisch vorgeschaltete Ausgangsschutzschaltung 221. Die grundsätzlich nicht zwingend notwendige, z.B. Suppressordioden besitzende Ausgangsschutzschaltung 221 kann jedoch gegebenenfalls für die Analogsignal-Ausgangsschaltung die Transienten begrenzen und/oder eine Störsignalfilterung durchführen. In optionaler zweckmäßiger alternativer Ergänzung besitzt der Signalausgang 201 ferner eine der Ausgangsklemme 211 elektrisch vorgeschaltete passive Signalanpassungseinheit 231 oder, wie bei Fig. 1 zu sehen, in zweckmäßiger weiterer Ergänzung zur Ausgangsschutzschaltung 221, wobei hierbei die passive Signalanpassungseinheit 231 zweckmäßig der Ausgangsschutzschaltung 221 elektrisch vorgeschaltet ist. Mit der passiven Signalanpassungseinheit 231, welche zwar in der Regel selten benötigt wird, können jedoch z.B. Strom- bzw. Spannungssignale auf einen gemeinsamen Signalpegel gebracht werden.

In ähnlicher Weise können auch weitere analoge Signalausgänge zusätzlich zu einer Ausgangsklemme eine Ausgangsschutzschaltung und/oder eine passive Signalanpassungseinheit besitzen, wobei bei der Ausführung gemäß Fig. 1 auch der analoge Signalausgang 202 zusätzlich zu einer Ausgangsklemme 212, eine elektrisch vorgeschaltete Ausgangsschutzschaltung 222 und eine dieser elektrisch vorgeschaltete Signalanpassungseinheit 232 besitzt.

Der Analogsignal-Ausgabekanal 100 ist nunmehr ausgebildet, ein Eingangssignal zu erfassen und ansprechend auf das erfasste Eingangssignal ein analoges Ausgangssignal an dem analogen Signalausgang 201 oder 202, wie nachfolgend detaillierter beschrieben, auszugeben.

Der Analogsignal-Ausgabekanal 100 beherbergt hierzu gemäß der in Fig. 1 dargestellten Lösung der Erfindung jeweils zwei Analogsignal-Ausgabeschaltungen 110 und 120 und zumindest eine erste Verbindungsauswahlvorrichtung 115, 125. Der Analogsignal-Ausgabekanal 100 beherbergt zweckmäßig auch die Diagnoseschaltung 130. Die erste Verbindungsauswahlvorrichtung ist in zweckmäßiger Ausgestaltung als Analogschalteinheit ausgebildet, wobei bevorzugt in jeder Analogsignal-Ausgabeschaltung 110 und 120 jeweils eine Analogschalteinheit 115 bzw. 125 beherbergt ist.

Jede Analogsignal-Ausgabeschaltung 110 und 120 besitzt ferner eine erste Anschlusseinrichtung 111 bzw. 121 und eine zweite Anschlusseinrichtung 112 bzw. 122. Jede der Analogsignal-Ausgabeschaltungen 110 und 120 ist mit deren erster Anschlusseinrichtung 111 bzw. 121 mit demselben analogen Signalausgang, z.B. 201 oder 202, zur Ausgabe eines analogen Ausgangssignals zumindest zeitlich nacheinander verbindbar, wobei beide Analogsignal-Ausgabeschaltungen 110 und 120 ausgebildet sind, ansprechend auf, an deren zweiten Anschlusseinrichtungen 112 bzw. 122 erfasste, einander entsprechende Eingangssignale, einander entsprechende analoge Ausgangssignale auszugeben.

Im normalen Betrieb der Analogsignal-Ausgangsschaltung und also für die Erfassung des Eingangssignals und für die auf das erfasste Eingangssignal ansprechende Ausgabe des analogen Ausgangssignals an einem analogen Signalausgang 201 oder 202 durch den Analogsignal-Ausgabekanal 100 ist jedoch jeweils nur eine der zwei beherbergten Analogsignal-Ausgabeschaltungen 110 und 120 für einen bestimmbaren Zeitraum wechselnd ausgewählt, mit deren erster Anschlusseinrichtung 111 bzw. 121 mit diesem analogen Signalausgang zur Ausgabe dieses analogen Ausgangssignals verbunden zu werden und ansprechend auf das, an deren zweiter Anschlusseinrichtung 112 bzw. 122 erfasste Eingangssignal als Ausgangssignal das Ausgangssignal des Analogsignal-Ausgabekanals auszugeben. Die jeweils andere Analogsignal-Ausgabeschaltung hingegen ist im normalen Betrieb für diesen bestimmbaren Zeitraum ausgewählt, zu Test- und/oder Diagnosezwecke verwendet zu werden und z.B. mit der Diagnoseschaltung 130 verbunden zu werden, und also für diesen bestimmbaren Zeitraum nicht mit deren erster Anschlusseinrichtung mit dem analogen Signalausgang zur dortigen Ausgabe des analogen Ausgangssignals verbunden zu werden. Die erste Verbindungsauswahlvorrichtung 115, 125 ist hierzu ausgebildet, die jeweilige erste Anschlusseinrichtung 111, 121 ausgewählt zumindest entweder mit diesem zu verbindenden analogen Signalausgang oder mit der Diagnoseschaltung zu verbinden.

Bei einem wie in Fig. 1 dargestellten aktuellen Zustand, ist also z.B. die Analogsignal-Ausgabeschaltung 110 ausgewählt bzw. vorgesehen, mit deren erster Anschlusseinrichtung 111 mit dem analogen Signalausgang 201 zur Ausgabe des analogen Ausgangssignals verbunden zu sein und ansprechend auf das, an deren zweiter Anschlusseinrichtung 112 erfasste Eingangssignal als Ausgangssignal das Ausgangssignal des Analogsignal-Ausgabekanals auszugeben und die Analogsignal-Ausgabeschaltung 120 ist vorgesehen, zu Diagnosezwecken mit der Diagnoseschaltung 130 verbunden zu sein.

Die bei der Ausgestaltung gemäß Fig. 1 die erste Verbindungsauswahlvorrichtung bereitstellenden Analogschalteinheiten 115 und 125 verbinden entsprechend in gegenseitiger Abstimmung die erste Anschlusseinrichtung 111 mit dem analogen Signalausgang 201 und die erste Anschlusseinrichtung 121 mit der Diagnoseschaltung 130.

Den ersten Anschlusseinrichtungen 111 und 121 kann ferner noch jeweils eine nicht dargestellte zusätzliche Entkopplungsschaltung zugeordnet sein, über welche jeweils die ersten Anschlusseinrichtungen 111 oder 121 der Analogsignal- Ausgabeschaltungen 110 oder 120 mit den Signalausgängen 201 und 202 mittels der ersten Verbindungsauswahlvorrichtung verbunden werden können. Grundsätzlich ist jedoch die Funktion einer Entkopplung, welche Rückwirkungen der Analogsignal-Ausgabeschaltungen 110 oder 120 untereinander oder auf die Signalausgänge 201 und 202 sowie Rückwirkungen der Signalausgänge untereinander verhindert, mit den ersten Verbindungsauswahlvorrichtung bzw. mit den in den jeweiligen Ausgabeschaltungen 110 oder 120 integrierten Analogschalteinheiten 115 und 125 umgesetzt.

Weitere von der ersten Verbindungsauswahlvorrichtung geführte Signalpfade, wie insbesondere an die Diagnoseeinrichtung 130 führende, um die ersten Anschlusseinrichtungen 111 oder 121 der Analogsignal-Ausgabeschaltungen 110 oder 120 mit diesen Signalpfaden verbinden zu können, zum Ausführen von Test- und Diagnoseszenarien zu Diagnosezwecken der Analogsignal-Ausgabeschaltungen, können somit zweckmäßig gleichermaßen entkoppelt werden.

Mit den bei Fig. 1 dargestellten Analogschalteinheiten 115 und 125 können somit auf äußerst einfache Weise von der jeweiligen Analogsignal-Ausgabeschaltung 110 bzw. 120 ausgegebene Analogsignale an ausgewählte Ausgangsklemmen angelegt werden. Die Analogschalteinheiten 115 und 125 werden durch die Umschaltung der auszugebenden Signale und durch den vorerwähnten Test durch die Diagnoseeinheit mit getestet.

Wie bei Fig. 1 ferner zu sehen, besitzt jede der Analogsignal-Ausgabeschaltungen 110 und 120 zweckmäßig eine aktive analoge Treiberstufe 114 bzw. 124, welcher die einzelnen, über die zweite Anschlusseinrichtung 112 oder 122 an die jeweilige Analogsignal-Ausgabeschaltung 110 bzw. 120 angelegten und erfassten Eingangssignale zur anwendungsspezifischen Verarbeitung der Eingangssignale zugeführt werden und gegebenenfalls einen Digital/AnalogWandler 116 bzw. 126, wobei der jeweilige digitale Signalanschluss des Digital/Analog-Wandlers an die jeweilige zweite Anschlusseinrichtung 112 bzw. 122 geschaltet ist und der jeweilige analoge Signalanschluss des Digital/Analog-Wandlers in Richtung zur ersten Verbindungsauswahleinrichtung geschaltet und also gemäß Beispiel nach Fig. 1 an die analoge Treiberstufe 114 bzw. 124 geschaltet ist.

Um in praktischer Weise auch die zweiten Anschlusseinrichtungen 112 und 122 entsprechend ausgewählt gegebenenfalls mit einer für die vorherige Verarbeitung des Eingangssignals des Analogsignal-Ausgabekanals vorgesehenen, insbesondere anwendungsspezifischen, Verarbeitungsvorrichtung 300 oder auch auf einfache Weise mit der Diagnoseschaltung 130 zu verbinden, besitzt der Analogsignal-Ausgabekanal 100 zweckmäßig eine zweite Verbindungsauswahlvorrichtung 101, welche ausgebildet ist, insbesondere in Abstimmung mit der ersten Verbindungsauswahlvorrichtung, diese Verbindungen zu bewirken.

Es sei darauf hingewiesen, dass die Ansteuerung der ersten Verbindungsauswahleinrichtung zur wechselnden Auswahl der Analogsignal-Ausgabeschaltungen, um die eine oder andere für einen bestimmbaren Zeitraum mit einem bestimmten analogen Signalausgang zur Ausgabe von analogen Ausgangssignalen zu verbinden bzw. für Test- und/oder Diagnosezwecke zu verwenden, und der gegebenenfalls vorhandenen zweiten Verbindungsauswahleinrichtung nicht in den Zeichnungen dargestellt ist, jedoch auf für den Fachmann an und für sich bekannte Maßnahmen umsetzbar ist. Da die Art der Ansteuerung ferner kein wesentlicher Bestandteil der Erfindung ist, wird sie auch nicht näher beschrieben. Die Ansteuerung kann jedoch z.B. durch die Diagnoseschaltung 130 selbst erfolgen oder, wenn, wie bei Fig. 1 dargestellt, z.B. ein Mikrocontroller als anwendungsspezifische Verarbeitungsvorrichtung 300 vorgesehen ist, auch durch diesen. Aufgrund der Nutzung eines wie bei Fig. 1 dargestellten Mikrocontrollers als vorherige Verarbeitungsvorrichtung 300 ist folglich der Einsatz der Digital/Analog-Wandler 116 bzw. 126 und der Einsatz einer digital arbeitenden Verbindungsauswahlvorrichtung 101, bei Fig. 1 als Datenkoppler bezeichnet, in praktischer Umsetzung besonders zweckmäßig.

Zum Einspeisen von Test- und Diagnosesignalen zu Diagnosezwecken der Analogsignal-Ausgabeschaltungen, z.B. für verschiedene Einstellungen einer Verstärkung, zur Überprüfung einer Bürdentreiberfähigkeit oder zur Überprüfung der integrierten Treiberstufe, ist somit zweckmäßig die zweite Verbindungsauswahlvorrichtung 101 so ausgebildet, dass es außerdem möglich ist, beide Analogsignal-Ausgabeschaltungen 110 oder 120 falls erwünscht auch gleichzeitig mit demselben Eingangssignal über die zweiten Anschlusseinrichtungen 112 und 122 zu verbinden. Dies kann insbesondere beim Umschalten der Analogsignal-Ausgabeschaltungen 110 und 120 der Fall sein, denn werden beim Umschalten zum Testen beide Analogsignal-Ausgabeschaltungen 110 und 120 für eine kurze Zeit parallel mit demselben Eingangssignal betrieben, können die Ausgabeergebnisse verglichen werden, welches folglich eine 100% Diagnosedeckung der Analogschalter ermöglicht. In diesem Fall werden folglich die von den Analogsignal-Ausgabeschaltungen 110 und 120 ausgegebenen Ausgangssignale, z.B. wie vorhergehend beschrieben, der Diagnoseschaltung 130 zugeführt.

Aber auch zur internen Strom- und Spannungsquellenüberwachung vorgesehene, Versorgungsspannungen der Peripherie, sowie diverse für Diagnosezwecke benötigte Referenzspannungen führende und andere Signalpfade können über die zweite Verbindungsauswahlvorrichtung geführt werden, um im Bedarfsfall die zweiten Anschlusseinrichtungen 112 oder 122 der Analogsignal-Ausgabeschaltungen 110 oder 120 mit diesen Signalpfaden verbinden zu können.

Wenn zum Testen beim vorerwähnten Umschalten der Analogsignal-Ausgabeschaltungen 110 und 120 beide Analogsignal-Ausgabeschaltungen 110 und 120 für eine kurze Zeit parallel mit demselben Eingangssignal betrieben und die Ausgangssignale verglichen werden, ermöglicht dies jedoch auch im Betrieb eine 100% Diagnosedeckung der Analogschalteinheiten 115 und 125 im Betrieb.

Diese Diagnoseschaltung 130 beinhaltet jedoch zweckmäßig alle erforderlichen Testeinrichtungen, die für eine festgelegte Diagnosedeckung für den Test der Analogsignal-Ausgabeschaltungen 110 und 120 erforderlich sind. Auch deren Ansteuerung kann je nach Ausführung durch die Diagnoseschaltung 130 selbst erfolgen oder durch eine andere Einrichtung, wie z.B. den als Verarbeitungsvorrichtung 300 skizzierten Mikrokontroller, der z.B. mit einer Sicherheitslogik ausgebildet ist. Auch kann eine Aufgabenteilung der Diagnosefunktionalitäten zwischen der Diagnoseschaltung 130 und dem Mikrokontroller in Bezug auf die Ansteuerung vorgesehen sein.

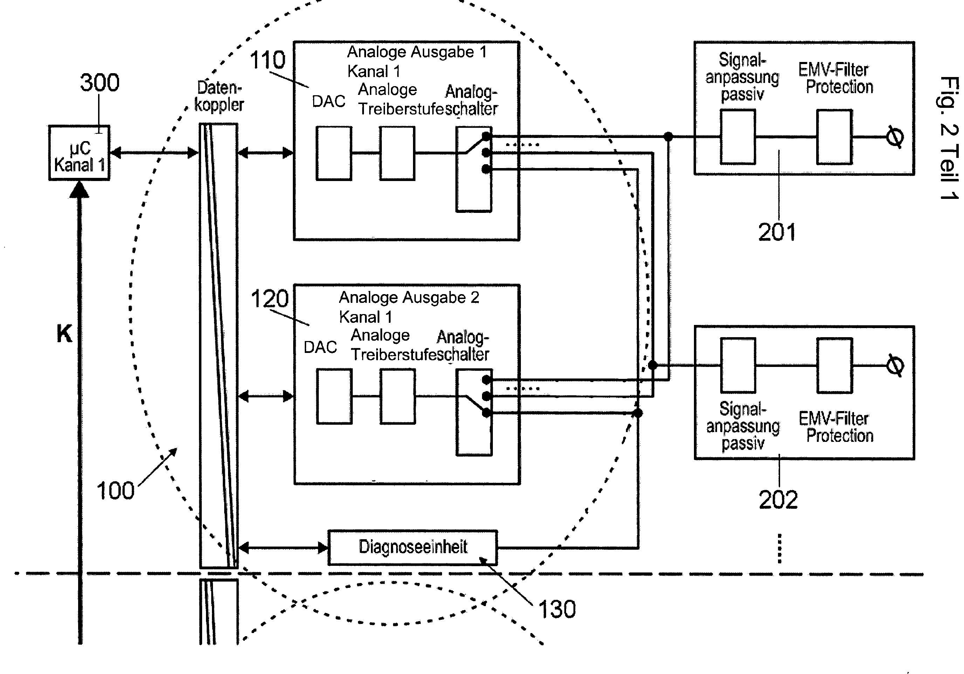

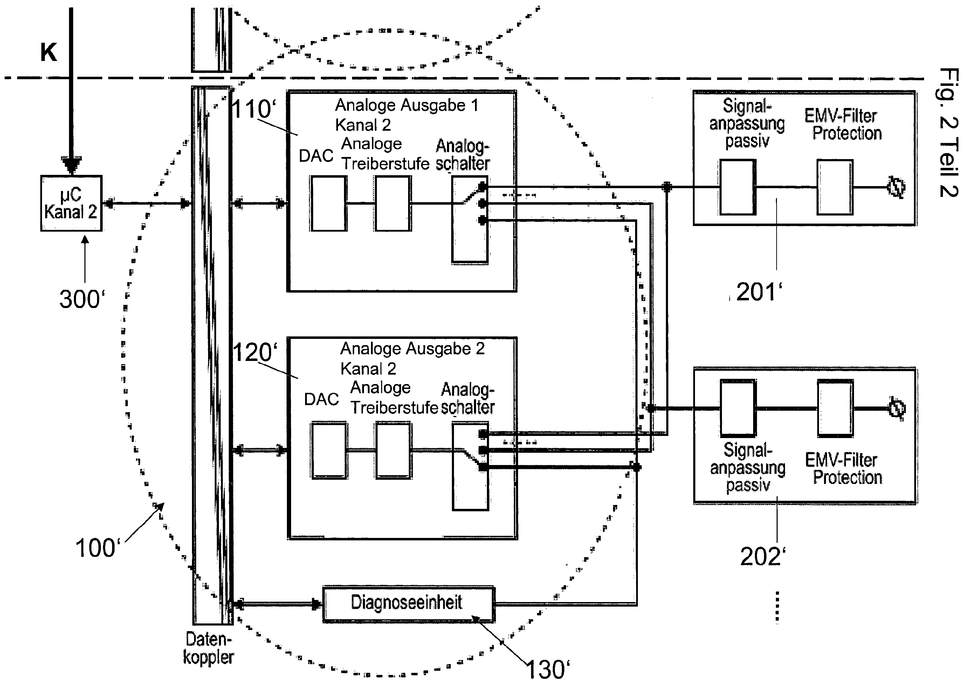

Nachfolgend wird auf Fig. 2 Bezug genommen, welche eine weitere bevorzugte und besonders zweckmäßige Ausgestaltungen aufweisende Ausführungsform einer Analogsignal-Ausgangsschaltung, jedoch mit zwei Analogsignal-Ausgabekanälen dargestellt. Da die Komponenten im Wesentlichen gleich sind oder gleich wirken, wie die in Bezug auf Fig. 1 beschriebenen, wird nachfolgend lediglich auf erfindungswesentliche Unterschiede eingegangen.

Ein erster, ähnlich zu Fig. 1 ausgebildeter Analogsignal-Ausgabekanal 100 ist hierbei links der in Fig. 2 Teil 1 gestrichelten Linie und der zweite Analogsignal-Ausgabekanal 100' rechts der in Fig. 2 Teil 2 gestrichelten Linie skizziert. In ähnlicher Weise können selbstverständlich weitere Analogsignal-Ausgabekanäle vorgesehen sein, so dass sich die Anzahl von Analogsignal-Ausgabekanälen entsprechend erhöht. Jeder Analogsignal-Ausgabekanal 100 und 100' besitzt hierbei wiederum zwei Analogsignal-Ausgabeschaltungen 110 und 120 bzw. 110' und 120', die in der bereits in Bezug auf Fig. 1 beschriebenen Weise aufgebaut sind, und eine Diagnoseschaltung 130 bzw. 130'. In alternativer, nicht dargestellter Ausführung, kann z.B. auch für beide Analogsignal-Ausgabekanäle 100 und 100' eine gemeinsame Diagnoseschaltung 130 vorgesehen sein.

Die bei Fig. 2 dargestellte Anzahl von zwei Analogsignal-Ausgabekanälen 100 und 100' können redundant betrieben werden oder zu einem Redundanzblock zusammengeschaltet sein. Wie bei Fig. 2 mit dem mit "K" bezeichneten Doppelpfeil dargestellt, kommunizieren hierzu z.B. jeweils eine einem Analogsignal-Ausgabekanal 100 vorgeschaltete Verarbeitungsvorrichtung 300 mit einer dem anderen Analogsignal-Ausgabekanal 100' vorgeschalteten Verarbeitungsvorrichtungen 300'.

Die Spannungsversorgung der Peripherie beider Analogsignal-Erfassungskanäle 100 und 100' oder auch weiterer, können durch die gleichen, nicht dargestellten Versorgungsspannungen oder auch separat versorgt werden, insbesondere bei hoch verfügbaren Geräten kann die Versorgung der beiden Analogsignal-Erfassungskanäle 100 und 100' zweckmäßig unabhängig voneinander realisiert werden. Die Überwachung der einzelnen Spannungen kann dann wiederum durch die Diagnoseschaltung 130 oder 130' des jeweiligen Analogsignal-Ausgabekanals 100 bzw. 100' erfolgen, welches aus Gründen der Übersichtlichkeit jedoch nicht näher dargestellt ist.

Zusammenfassend lässt sich somit festhalten, dass zu jedem beliebigen Zeitpunkt die Ausgabe der analogen Ausgangssignale mittels der Analogsignal-Ausgabeschaltung 110 oder 120 eines jeden Analogsignal-Ausgabekanals 100, 100', die mit dem jeweils zu versorgenden Ausgang (aus einer Anzahl von 1 bis n) verbunden ist, erfolgen kann. Diese Analogsignal-Ausgabeschaltung 110 oder 120 eines jeden Analogsignal-Ausgabekanals 100, 100' kann ferner zwischen den Signalausgängen umgeschaltet werden, um jeweilige Ausgangssignale an einzelnen analogen Signalausgänge nacheinander auszugeben. Mit anderen Worten kann diese somit aktive Analogsignal-Ausgabeschaltung zwischen den einzelnen Signalausgängen zur Ausgabe der Ausgangswerte umgeschaltet werden, wobei die Umschaltung zwischen den Signalausgängen z.B. durch eine vorhergehende Priorisierung der einzelnen Signalausgängen gesteuert werden kann.

Die zweite Analogsignal-Ausgabeschaltung 120 bzw. 120' eines jeden Analogsignal-Ausgabekanals 100, 100', die im Regelbetrieb zu diesem Zeitpunkt nicht an einer Sicherheitsfunktion beteiligt sich, kann sich folglich im Test befinden, der durch die Diagnoseeinheit durchgeführt wird, ohne die Funktionalität des Analogsignal-Ausgabekanals 100, 100' und also eine mit diesem verbundene Sicherheitsfunktion in irgendeiner Weise zu beeinträchtigen. Sobald der Test bzw. die Diagnose vollständig abgeschlossen ist, kann die getestete bzw. diagnostizierte Analogsignal-Ausgabeschaltung wieder in die Sicherheitskette aufgenommen und die andere Analogsignal-Ausgabeschaltung aus der Sicherheitskette entfernt und mit der Diagnoseeinheit für die Testzwecke verbunden. Wurde auch diese Analogsignal-Ausgabeschaltung vollständig getestet, erfolgt z.B. eine weitere Umschaltung, bei der der Ausgangszustand wieder hergestellt wird. Außerdem ist es möglich, beide Analogsignal-Ausgabeschaltung eines Analogsignal-Ausgabekanals auch parallel mit den selben Eingangssignalen zu betreiben, um z.B. die verarbeiteten Signale beider Analogsignal-Ausgabeschaltung miteinander zu vergleichen und somit die Diagnosedeckung noch weiter zu verbessern. Da während des Tests die zu testende Analogsignal-Ausgabeschaltung somit in keiner Sicherheitskette liegt, und somit auch keine sichtbaren Testsignale an den Signalausgängen 201, 202 anliegen, kann jede Analogsignal-Ausgabeschaltung zu 100% getestet werden. Folglich können die Diagnose-/Testimpulse jegliche Sicherheitsfunktion auch nicht beeinträchtigen und es können weitere Zustände getestet werden, die beim Betrieb in einer Sicherheitskette nicht zulässig wären, z.B. verschiedene Einstellungen einer aktiven Signalanpassung, z.B. der Verstärkung.

Im Fehlerfall gibt die erfindungsgemäße Analogsignal-Ausgangsschaltung die gesicherte Diagnose, welche der Analogschaltungen defekt ist und kann aufgrund der "überzähligen" Analogsignal-Ausgabeschaltung in jedem Analogsignal-Ausgabekanal somit im Fehlerfall auch einen abgesicherten Weiterbetrieb mit eingeschränkter Diagnose ermöglichen.

Ferner kann mittels der Diagnoseschaltung auch eine Kalibrierung einer Analogsignal-Ausgabeschaltung im laufenden Betrieb ohne zeitliche und/oder funktionale Beeinflussung der laufenden Messungen und der Gerätefunktion (Selbstkalibrierung) bewirkt werden. Da somit durch die Diagnoseeinheit die gesamte Analogsignal-Ausgangsschaltung auch während der Laufzeit kalibriert werden kann, kann mit der Erfindung durch Testen bzw. Diagnostizieren der Analogsignal-Ausgangsschaltung im Betrieb je nach Anwendung auch ein Proof-Test (vorheriger Funktionstest) vollständig ersetzt werden.

Da eine von der Diagnoseschaltung durchgeführte Diagnose keinen Einfluss auf das zeitliche Verhalten hat, weder in Bezug auf das die Analogsignal-Ausgangsschaltung umfassende Gerät noch in Bezug die Geräte, an die Analogsignale über die Signalausgänge übergegeben werden, kann die von der Diagnoseschaltung durchgeführte Diagnose damit z.B. auch weiterhin die synchrone Signalverarbeitung und Übergabe an ein überlagertes Netzwerk sicherstellen. So sind z.B. auch keine Testsignale an der Ausgangsklemme eines Signalausgangs sichtbar.

Die von der Diagnoseschaltung durchgeführte Diagnose kann folglich auch die Zustände der Analogsignal-Ausgabeschaltungen überprüfen, die in einer aktiven Ausgabe der Ausgangssignale unzulässig sind. Da somit insgesamt die Testtiefe gegenüber herkömmlichen Lösungen besser ist, verbessern sich folglich auch die Ergebnisse der Quantifizierung. Auch kann der Test bzw. die Diagnose parallel mit der Ausgabe der analogen Ausgangssignale, insbesondere auch parallel mit der Ausgabe von für die Sicherheit eines Prozesses relevanten analogen Ausgangssignalen, laufen. Die erfindungsgemäße Lösung ist somit auch für HART(Highway Addressable Remote Transducer)-Kommunikationssysteme, insbesondere in Verbindung mit der 4mA bis 20mA Technik zur Übertragung analoger Signale geeignet.

Die von der Diagnoseschaltung eingesetzten Diagnose-/Testpattern können z.B. auch aus dem Entwicklungsprozess entnommen werden, wodurch sich der Entwicklungsaufwand für die Entwicklung der Diagnoseschaltung reduziert. Auch bietet die Erfindung eine kostengünstige Realisierung, da jeweils für zwei und mehr Analogsignal-Ausgabeschaltungen nur eine Diagnoseeinheit benötigt wird.

Ein wesentlicher Aspekt der Erfindung liegt somit darin, dass eine Analogsignal-Ausgabeschaltung des Analogsignal-Ausgabekanals ein Analogsignal an einem analogen Signalausgang ausgibt, während eine weitere Analogsignal-Ausgabeschaltung des selben Analogsignal-Ausgabekanals für einen bestimmbaren Zeitraum getestet und/oder diagnostiziert wird. Nach dem Test bzw. der Diagnose können und werden diese daraufhin getauscht, d.h. die getestete Analogsignal-Ausgabeschaltung übernimmt nach dem Wechsel für einen bestimmbaren Zeitraum die Ausgabe der Analogsignale, während die erste Analogsignal-Ausgabeschaltung getestet wird.

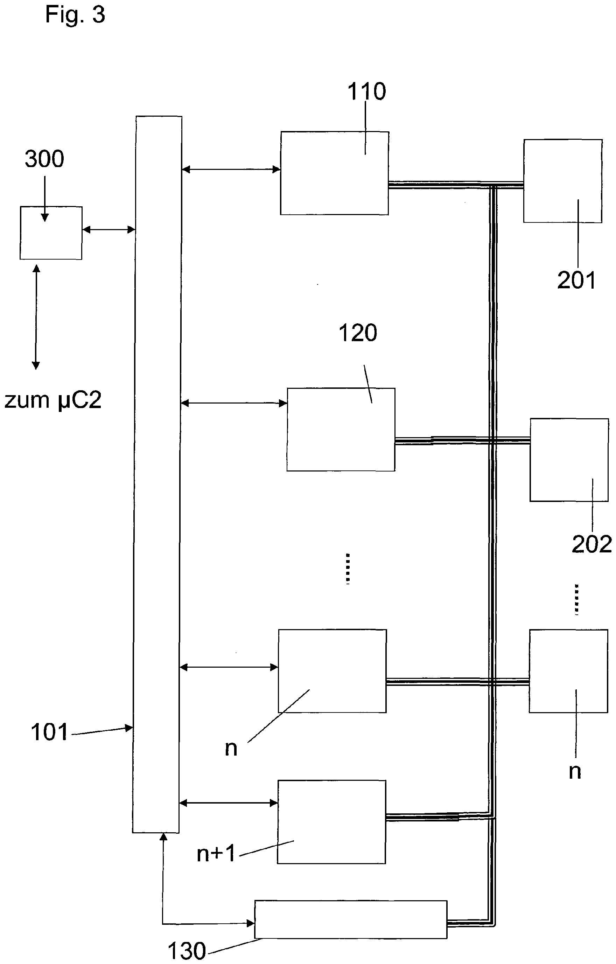

Während Fig. 1 und Fig. 2 Lösungen, insbesondere zur Ausgabe von z.B. nicht häufig zu aktualisierenden analogen Ausgangssignalen, mit einer Anzahl von 1 bis n analogen Signalausgängen und mit je zwei Analogsignal-Ausgabeschaltungen pro Analog-Ausgabekanal skizzieren, bei denen also eine Analogsignal-Ausgabeschaltung zwischen den Signalausgängen verbunden wird, während die andere mit der Diagnoseeinheit und/oder weiteren Signalen wie Referenzspannungen und Versorgungsspannungen zur Durchführung von Messungen zu Testzwecken verbunden ist, wobei nach dem Test der Wechsel der beiden Analogsignal-Ausgabeschaltungen erfolgt, ist der Fig. 3 eine Skizze einer weiteren auf Fig. 1 basierenden Ausführungsform einer Analogsignal-Ausgangschaltung mit lediglich einem Analogsignal-Ausgabekanal zu entnehmen, welche insbesondere zur Ausgabe schneller zu aktualisierenden bzw. zeitkritischen analogen Ausgangssignalen nochmals verbessert ist. Da die Komponenten im Wesentlichen gleich sind oder gleich wirken, wie die in Bezug auf Fig. 1 oder auf Fig. 2 beschriebenen, wird nachfolgend lediglich auf erfindungswesentliche Unterschiede eingegangen.

Bei der Lösung nach Fig. 3 ist wiederum eine Anzahl von 1 bis n analogen Signalausgängen vorhanden, jedoch beherbergt ein Analogsignal-Ausgabekanal eine Anzahl von wenigstens drei Analogsignal-Ausgabeschaltungen und maximal eine Anzahl von Analogsignal-Ausgabeschaltungen, die um eins größer als die Anzahl der analogen Signalausgängen ist.

Bei Fig. 3 ist die Anzahl von analogen Signalausgängen daher mit 201, 202 bis n angedeutet und die Anzahl von Analogsignal-Ausgabeschaltungen daher mit 110, 120 bis n, n+1 angedeutet.

Da jede der Analogsignal-Ausgabeschaltungen eines Analogsignal-Ausgabekanals 100 mit deren erster Anschlusseinrichtung mit jeweils einem analogen Signalausgang aus der Anzahl von analogen Signalausgängen zur Ausgabe eines analogen Ausgangssignals verbindbar ist, können folglich mehrere Signalausgänge gleichzeitig mit mehreren Analogsignal-Ausgabeschaltungen zur Ausgabe von analogen Ausgangssignalen an den Signalausgängen verbunden sein, also stehen je nach Ausführung maximal n Analogsignal-Ausgabeschaltungen für maximal n Signalausgänge zur Verfügung.

Eine Analogsignal-Ausgabeschaltung ist für einen bestimmbaren Zeitraum wechselnd ausgewählt, z.B. gemäß Fig. 3 die Analogsignal-Ausgabeschaltung "n+1", getestet und/oder diagnostiziert zu werden, und also z.B. mit der Diagnoseeinheit 130 verbunden. Nach dem Test bzw. der Diagnose erfolgt wiederum der Wechsel der Analogsignal-Ausgabeschaltungen, d.h. die getestete Analogsignal-Ausgabeschaltung übernimmt die Bereitstellung einer Ausgangssignalausgabe, wird also mit einem der Signalausgänge verbunden, während die Analogsignal-Ausgabeschaltung, die bis zu diesem Zeitpunkt mit diesem Signalausgang verbunden war, getestet wird. Diese Struktur ist folglich zur Ausgabe von häufiger zu aktualisierenden bzw. zeitkritischen Ausgangssignalen besser geeignet. Entsprechend zu den Ausführungsformen nach Fig. 1 und Fig. 2 können wiederum weitere Signale wie z.B. Referenzspannungen und Versorgungsspannungen zu Testzwecken über die zweite Verbindungsauswahlvorrichtung 101 zugeführt werden und/oder mehrere Analogsignal-Ausgabekanäle parallel, insbesondere redundant oder zu einem Redundanzblock zusammengeschaltet, betrieben werden.

Zur Erfassung von Eingangssignalen können somit die Analogsignal-Ausgabeschaltungen bzw. die bei Fig. 3 nicht explizit dargestellten zweiten Anschlusseinrichtungen ferner auch mit der Diagnoseeinheit 130 zur Durchführung von Messungen zu Testzwecken mittels der zweiten Verbindungsauswahlvorrichtung 101 verbunden werden können.

### Bezugszeichenliste

- 100, 100': Analogsignal-Ausgabekanal
- 101: zweite Verbindungsauswahlvorrichtung
- 110, 110', 120, 120': Analogsignal-Ausgabeschaltung
- 111, 121: erste Anschlusseinrichtung
- 112, 122: zweite Anschlusseinrichtung
- 114, 124: analoge Treiberstufe
- 115, 125: erste Verbindungsauswahlvorrichtung, insbesondere Analogschalteinheit
- 116, 126: Digital/Analog-Wandler
- 130, 130': Diagnoseschaltung
- 201, 201', 202, 202': analoger Signalausgang
- 211, 212: Ausgangsklemme
- 221, 222: Ausgangsschutzschaltung
- 231, 232: passive Signalanpassungseinheit
- 300, 300': Verarbeitungsvorrichtung

## Patentansprüche

1. Analogsignal-Ausgangsschaltung mit einer ersten Anzahl von Analogsignal-Ausgabekanälen (100; 100') und zumindest einer Diagnoseschaltung (130; 130'), wobei
- jeder Analogsignal-Ausgabekanal (100; 100') ausgebildet ist, ansprechend auf ein erfasstes Eingangssignal ein analoges Ausgangssignal an einem analogen Signalausgang aus einer zweiten Anzahl von analogen Signalausgängen (201, 202; 201', 202') auszugeben;
- jeder Analogsignal-Ausgabekanal (100; 100') jeweils zwei Analogsignal-Ausgabeschaltungen (110, 120; 110', 120') und zumindest eine erste Verbindungsauswahlvorrichtung (115, 125) beherbergt;
- jede Analogsignal-Ausgabeschaltung (110, 120; 110', 120') eine erste Anschlusseinrichtung (111, 121) und eine zweite Anschlusseinrichtung (112, 122) besitzt;
- jede der Analogsignal-Ausgabeschaltungen (110, 120; 110', 120') eines Analogsignal-Ausgabekanals (100; 100') mit deren erster Anschlusseinrichtung (111, 121) mit demselben analogen Signalausgang aus der zweiten Anzahl von analogen Signalausgängen (201, 202; 201', 202') zur Ausgabe eines analogen Ausgangssignalsignals zeitlich nacheinander verbindbar ist und beide Analogsignal-Ausgabeschaltungen (110, 120; 110', 120') eines Analogsignal-Ausgabekanals (100; 100') ausgebildet sind, ansprechend auf einander entsprechende, an deren zweiten Anschlusseinrichtungen (112, 122) anliegende, erfasste Eingangssignale einander entsprechende Ausgangssignale auszugeben;
- je Analogsignal-Ausgabekanal (100; 100') für die Erfassung des Eingangssignals und für die auf das erfasste Eingangssignal ansprechende Ausgabe des analogen Ausgangssignals an einem analogen Signalausgang aus der zweiten Anzahl von analogen Signalausgängen jeweils eine der zwei beherbergten Analogsignal-Ausgabeschaltungen für einen bestimmbaren Zeitraum wechselnd ausgewählt ist, nicht mit deren erster Anschlusseinrichtung mit diesem analogen Signalausgang zur Ausgabe dieses analogen Ausgangssignals verbunden, sondern für Test- und/oder Diagnosezwecke verwendet zu werden und die jeweils andere der zwei beherbergten Analogsignal-Ausgabeschaltungen (110, 120; 110', 120') für diesen bestimmbaren Zeitraum ausgewählt ist, mit deren erster Anschlusseinrichtung mit diesem analogen Signalausgang zur Ausgabe dieses analogen Ausgangssignals verbunden zu werden und ansprechend auf das, an deren zweiter Anschlusseinrichtung erfasste Eingangssignal als Ausgangssignal das Ausgangssignal des Analogsignal-Ausgabekanals auszugeben und, wobei die erste Verbindungsauswahlvorrichtung (115, 125) hierzu ausgebildet ist, die jeweilige erste Anschlusseinrichtung (111, 121) der zwei beherbergten Analogsignal-Ausgabeschaltungen (110, 120; 110', 120') ansprechend auf die Auswahl zumindest entweder mit diesem zu verbindenden analogen Signalausgang oder mit der Diagnoseschaltung zu verbinden, wobei
jeder Analogsignal-Ausgabekanal eine zweite Verbindungsauswahlvorrichtung (101) besitzt, welche ausgebildet ist, in Abstimmung mit der ersten Verbindungsauswahlvorrichtung (115, 125) die zweiten Anschlusseinrichtungen (112, 122) entsprechend ausgewählt mit einer für die vorherige Verarbeitung von Eingangssignalen des Analogsignal-Ausgabekanals vorgesehenen Verarbeitungsvorrichtung (300) oder mit der Diagnoseschaltung (130) zu verbinden.

2. Analogsignal-Ausgangsschaltung mit einer ersten Anzahl von Analogsignal-Ausgabekanälen (100; 100') und zumindest einer Diagnoseschaltung (130; 130'), wobei
- jeder Analogsignal-Ausgabekanal (100; 100') ausgebildet ist, ansprechend auf erfasste Eingangssignale an einer zweiten Anzahl von wenigstens zwei analogen Signalausgängen (201, 202; 201', 202') analoge Ausgangssignale auszugeben;
- jeder Analogsignal-Ausgabekanal (100; 100') jeweils eine dritte Anzahl von Analogsignal-Ausgabeschaltungen (110, 120; 110', 120') und zumindest eine erste Verbindungsauswahlvorrichtung (115, 125) beherbergt;
- wobei die dritte Anzahl wenigstens drei beträgt und maximal um eins größer als die zweite Anzahl ist;
- jede Analogsignal-Ausgabeschaltung (110, 120; 110', 120') eine erste Anschlusseinrichtung (111, 121) und eine zweite Anschlusseinrichtung (112, 122) besitzt;
- jede der Analogsignal-Ausgabeschaltungen (110, 120; 110', 120') eines Analogsignal-Ausgabekanals (100; 100') mit deren erster Anschlusseinrichtung (111, 121) mit jeweils einem analogen Signalausgang aus der zweiten Anzahl von analogen Signalausgängen (201, 202; 201', 202') zur Ausgabe eines analogen Ausgangssignals verbindbar ist, jede der Analogsignal-Ausgabeschaltungen (110, 120; 110', 120') eines Analogsignal-Ausgabekanals (100; 100') mit deren erster Anschlusseinrichtung (111, 121) mit demselben analogen Signalausgang aus der zweiten Anzahl von analogen Signalausgängen (201, 202; 201', 202') zur Ausgabe eines analogen Ausgangssignals zeitlich nacheinander verbindbar ist und alle der dritten Anzahl von Analogsignal-Ausgabeschaltungen (110, 120; 110', 120') eines Analogsignal-Ausgabekanals (100; 100') ausgebildet sind, ansprechend auf an deren zweiten Anschlusseinrichtungen (112, 122)anliegende, erfasste, einander entsprechende Eingangssignale einander entsprechende Ausgangssignale auszugeben;
- je Analogsignal-Ausgabekanal (100; 100') für die Erfassung von Eingangssignalen und für die auf die erfassten Eingangssignale ansprechenden Ausgaben der analogen Ausgangssignale an Signalausgängen aus der zweiten Anzahl von analogen Signalausgängen jeweils eine Analogsignal-Ausgabeschaltung für einen bestimmbaren Zeitraum wechselnd ausgewählt ist, nicht mit deren erster Anschlusseinrichtung mit einem analogen Signalausgang zur Ausgabe eines analogen Ausgangssignals verbunden, sondern für Test- und/oder Diagnosezwecke verwendet zu werden, und alle bis auf diese eine der dritten Anzahl von beherbergten Analogsignal-Ausgabeschaltungen (110, 120; 110', 120') jeweils für diesen bestimmten Zeitraum ausgewählt sind, mit deren ersten Anschlusseinrichtungen mit bestimmten analogen Signalausgängen aus der zweiten Anzahl von analogen Signalausgängen zur Ausgabe von analogen Ausgangssignalen verbunden zu werden und ansprechend auf die, an deren zweiten Anschlusseinrichtungen erfassten Eingangssignale als Ausgangssignale die Ausgangssignale des Analogsignal-Ausgabekanals auszugeben, wobei die erste Verbindungsauswahlvorrichtung (115, 125) hierzu ausgebildet ist, die jeweiligen ersten Anschlusseinrichtungen (111, 121) aller beherbergten Analogsignal-Ausgabeschaltungen (110, 120; 110', 120') ansprechend auf die Auswahl zumindest entweder mit einem bestimmten zu verbindenden analogen Signalausgang oder mit der Diagnoseschaltung zu verbinden wobei
jeder Analogsignal-Ausgabekanal eine zweite Verbindungsauswahlvorrichtung (101) besitzt, welche ausgebildet ist, in Abstimmung mit der ersten Verbindungsauswahlvorrichtung (115, 125) die zweiten Anschlusseinrichtungen (112, 122) entsprechend ausgewählt mit einer für die vorherige Verarbeitung von Eingangssignalen des Analogsignal-Ausgabekanals vorgesehenen Verarbeitungsvorrichtung (300) oder mit der Diagnoseschaltung (130) zu verbinden.

3. Analogsignal-Ausgangsschaltung nach Anspruch 1 oder 2, mit einer ersten Anzahl von wenigstens zwei Analogsignal-Ausgabekanälen (100, 100').

4. Analogsignal-Ausgangsschaltung nach Anspruch 1 oder 2, mit einer ersten Anzahl von wenigsten zwei Analogsignal-Ausgabekanälen die redundant betrieben werden können oder zu einem Redundanzblock zusammenschaltbar sind.

5. Analogsignal-Ausgangsschaltung nach Anspruch 1, 2, 3 oder 4, wobei zumindest ein Analogsignal-Ausgabekanal (100, 100') zur Verarbeitung auch von digitalen Signalen ausgebildet ist und jede Analogsignal-Ausgabeschaltung (110, 120) dieses Analogsignal-Ausgabekanals einen Digital/Analog-Wandler (116, 126) beherbergt, dessen digitaler Signalanschluss an die jeweilige zweite Anschlusseinrichtung (112, 122) geschaltet ist und dessen analoger Signalanschluss in Richtung zur ersten Verbindungsauswahleinrichtung geschaltet ist.

6. Analogsignal-Ausgangsschaltung nach einem der vorstehenden Ansprüche, wobei die zweite Verbindungsauswahlvorrichtung (101) ausgebildet ist, so dass eine Verbindung einer jeweiligen zweiten Anschlusseinrichtung (112, 122) zur Erfassung eines Eingangssignals auch mit der Diagnoseschaltung (130), mit wenigstens einer Referenzspannung oder mit wenigstens einer Versorgungsspannung einer Peripherieeinrichtung auswählbar ist.

7. Analogsignal-Ausgangsschaltung nach einem der vorstehenden Ansprüche, wobei die Analogsignal-Ausgabeschaltung eine analoge Treiberstufe (114, 124) beherbergt.

8. Analogsignal-Ausgangsschaltung nach einem der vorstehenden Ansprüche, wobei zumindest ein analoger Signalausgang aus der zweiten Anzahl von analogen Signalausgängen (201, 202, 201', 202') zusätzlich zu einer Ausgangsklemme (211, 212) eine Ausgangsschutzschaltung (221, 222) und/oder eine passive Signalanpassungseinheit (231, 232) besitzt.

9. Analogsignal-Ausgangsschaltung nach einem der vorstehenden Ansprüche, wobei die erste Verbindungsauswahlvorrichtung als Analogschalteinheit (115, 125) ausgebildet ist, wobei in jeder Analogsignal-Ausgabeschaltung (110, 120) jeweils eine solche Analogschalteinheit beherbergt ist.

10. Analogsignal-Ausgangsschaltung nach einem der vorstehenden Ansprüche, welche ausgebildet ist, die wechselnd ausgewählten Analogsignal-Ausgabeschaltungen 110 und 120 beim Umschalten zum Testen für eine kurze Zeit parallel mit demselben Eingangssignal zu betreiben, und die Ausgabeergebnisse zu vergleichen.

## Claims

1. An analog signal output circuit having a first number of analog signal output channels (100, 100') and at least one diagnostic circuit (130, 130'), wherein
- each analog signal output channel (100, 100') is adapted, in response to an acquired input signal, to output an analog output signal at one analog signal output of a second number of analog signal outputs (201, 202, 201', 202');
- each analog signal output channel (100; 100') accommodates two analog signal output circuits (110, 120; 110', 120') and at least one first connection selector device (115, 125);
- each analog signal output circuit (110, 120, 110', 120') has a first connection device (111, 121) and a second connection device (112, 122);
- each of the analog signal output circuits (110, 120, 110', 120') of an analog signal output channel (100, 100') is connectable, sequentially in time, with its first connection device (111, 121) to the same analog signal output of the second number of analog signal outputs (201, 202; 201', 202') for outputting an analog output signal, and both analog signal output circuits (110, 120; 110', 120') of an analog signal output channel (100, 100') are adapted, in response to acquired, mutually corresponding input signals that are applied at their second connection devices (112, 122), to output mutually corresponding output signals;
- for each analog signal output channel (100, 100'), for the acquiring of the input signal and for the outputting of the analog output signal in response to the acquired input signal at one analog signal output of the second number of analog signal outputs, a respective one of the two accommodated analog signal output circuits is alternately selected, for a predeterminable period of time, to not be connected with its first connection device to this analog signal output for outputting this analog output signal, but rather to be used for test and/or diagnostic purposes, and the respective other one of the two accommodated analog signal output circuits (110, 120; 110', 120') is selected for this predeterminable period of time to be connected with its first connection device to this analog signal output for outputting this analog output signal, and, in response to the input signal acquired at its second connection device, to output the output signal of the analog signal output channel as the output signal, and wherein for this purpose, in response to the selection, the first connection selector device (115, 125) is adapted to connect the respective first connection device (111, 121) of the two accommodated analog signal output circuits (110, 120; 110', 120') to at least either this analog signal output to be connected or to the diagnostic circuit; wherein
each analog signal output channel has a second connection selector device (101) that is adapted to connect the second connection devices (112, 122), in correspondingly selected manner in coordination with the first connection selector device (115, 125), to a processing device (300) intended for previous processing of input signals of the analog signal output channel, or to the diagnostic circuit (130).

2. An analog signal output circuit having a first number of analog signal output channels (100, 100') and at least one diagnostic circuit (130, 130'), wherein
- each analog signal output channel (100,100') is adapted, in response to acquired input signals, to output analog output signals at a second number of at least two analog signal outputs (201, 202, 201', 202');
- each analog signal output channel (100; 100') accommodates a third number of analog signal output circuits (110, 120; 110', 120') and at least one first connection selector device (115,125);
- wherein the third number is at least three and is at most greater by one than the second number;
- each analog signal output circuit (110, 120, 110', 120') has a first connection device (111, 121) and a second connection device (112, 122);
- each of the analog signal output circuits (110, 120, 110', 120') of an analog signal output channel (100, 100') is connectable with its first connection device (111, 121) to a respective analog signal output of the second number of analog signal outputs (201, 202; 201', 202') for outputting an analog output signal, each of the analog signal output circuits (110, 120, 110', 120') of an analog signal output channel (100, 100') is connectable, sequentially in time, with its first connection device (111, 121) to the same analog signal output of the second number of analog signal outputs (201, 202; 201', 202') for outputting an analog output signal, and all of the third number of analog signal output circuits (110, 120; 110', 120') of an analog signal output channel (100, 100') are adapted, in response to acquired, mutually corresponding input signals that are applied at their second connection devices (112, 122), to output mutually corresponding output signals;
- for each analog signal output channel (100, 100'), for the acquiring of input signals and for the outputting of the analog output signals in response to the acquired input signals signal at signal outputs of the second number of analog signal outputs, a respective analog signal output circuit is alternately selected, for a predeterminable period of time, to not be connected with its first connection device to an analog signal output for outputting an analog output signal, but rather to be used for test and/or diagnostic purposes, and all except this one of the third number of accommodated analog signal output circuits (110, 120; 110', 120') are selected for this predeterminable period of time to be connected with their first connection devices to particular analog signal outputs of the second plurality of analog signal outputs for outputting analog output signals, and in response to the input signals acquired at their second connection devices to output the output signals of the analog signal output channel as the output signals, wherein for this purpose, in response to the selection, the first connection selector device (115, 125) is adapted to connect the respective first connection devices (111, 121) of all accommodated analog signal output circuits (110, 120; 110', 120') to at least either a particular analog signal output to be connected or to the diagnostic circuit; wherein each analog signal output channel has a second connection selector device (101) that is adapted to connect the second connection devices (112, 122), in correspondingly selected manner in coordination with the first connection selector device (115, 125), to a processing device (300) intended for previous processing of input signals of the analog signal output channel, or to the diagnostic circuit (130).

3. The analog signal output circuit according to claim 1 or 2,
comprising a first number of at least two analog signal output channels (100, 100').

4. The analog signal output circuit according to claim 1 or 2,
comprising a first number of at least two analog signal output channels that can be operated redundantly or can be interconnected to form a redundancy block.

5. The analog signal output circuit according to claim 1, 2, 3 or 4,
wherein at least one analog signal output channel (100, 100') is also adapted for the processing of digital signals, and each analog signal output circuit (110, 120) of this analog signal output channel comprises a digital/analog converter (116, 126) which has its digital signal port connected to the respective second connection device (112, 122) and its analog signal port connected in the direction of the first connection selector device.

6. The analog signal output circuit according to any one of the preceding claims,
wherein the second connection selector device (101) is configured such that a connection of a respective second connection device (112, 122) for acquiring an input signal is also selectable with the diagnostic circuit (130), with at least one reference voltage or with at least one supply voltage of a peripheral device.

7. The analog signal output circuit according to any one of the preceding claims,
wherein the analog signal output circuit accommodates an analog driver stage (114, 124).

8. The analog signal output circuit according to any one of the preceding claims,
wherein at least one analog signal output of the second number of analog signal outputs (201, 202, 201', 202') comprises, in addition to an output terminal (211, 212), an output protection circuit (221, 222) and/or a passive signal conditioning unit (231, 232).

9. The analog signal output circuit according to any one of the preceding claims,
wherein the first connection selector device is implemented as an analog switching unit (115, 125), wherein each analog signal output circuit (110,120) accommodates such an analog switching unit.

10. The analog signal output circuit according to any one of the preceding claims,
which is adapted, when switching for testing purposes, to operate the alternately selected analog signal output circuits 110 and 120 in parallel with the same input signal for a short time, and to compare the output results.

## Revendications

1. Circuit de sortie de signaux analogiques avec un premier nombre de canaux de sortie de signaux analogiques (100 ; 100') et au moins un circuit de diagnostic (130 ; 130'), où
- chaque canal de sortie de signaux analogiques (100 ; 100') est conçu pour envoyer, en réponse à un signal d'entrée, un signal de sortie analogique au niveau d'une sortie de signal analogique parmi un deuxième nombre de sorties de signaux (201, 202 ; 201', 202') ;
- chaque canal de sortie de signaux analogiques (100 ; 100') héberge chacun deux circuits de sortie de signaux analogiques (110, 120 ; 110', 120') et au moins un premier dispositif de sélection de liaison (115, 125) ;
- chaque circuit de sortie de signaux analogique (110, 120 ; 110', 120') comprend un premier dispositif de raccordement (111, 121) et un deuxième dispositif de raccordement (112, 122) ;
- chacun des circuits de sortie de signaux analogiques (110, 120 ; 110', 120') d'un canal de sortie de signaux analogiques (100 ; 100') peut être relié, avec leur premier dispositif de raccordement (111, 121), avec la même sortie de signaux analogiques (201, 202 ; 201', 202') pour la sortie d'un signal de sortie successivement dans le temps et les deux circuits de sortie de signaux analogiques (110, 120 ; 110', 120') d'un canal de sortie de signaux analogiques (100 ; 100') sont conçus pour sortir, en réponse à des signaux d'entrée correspondant entre eux détectés, appliqués à leurs deuxièmes dispositifs de raccordement (112, 122), des signaux de sortie correspondant entre eux ;
- pour chaque canal de sortie de signaux analogiques (100 ; 100') pour la détection du signal d'entrée et pour la sortie, en réponse au signal d'entrée détecté, du signal de sortie analogique, au niveau d'une sortie de signaux analogiques parmi le deuxième nombre de sorties analogiques, un des deux circuits de sortie de signaux analogiques est sélectionné de manière alternée pour une période déterminée, pour ne pas être relié, avec son premier dispositif de raccordement, avec cette sortie de signaux analogiques pour la sortie de ce signal de sortie analogique mais pour être utilisé à des fins de test et/ou de diagnostic et l'autre des deux circuits de sortie de signaux analogiques hébergés (110, 120 ; 110', 120') est sélectionné pour cette période prédéterminée, pour être relié, avec son premier dispositif de raccordement, avec cette sortie de signaux analogiques pour la sortie de ce signal de sortie analogique et, en réponse au signal d'entrée détecté au niveau de son deuxième dispositif de raccordement, en tant que signal de sortie, le signal de sortie du canal de sortie de signaux analogiques, où le premier dispositif de sélection de liaison (115, 125) est conçu pour relier le premier dispositif de raccordement (111, 121) des deux circuits de sortie de signaux analogiques hébergés (110, 120 ; 110', 120') en réponse à la sélection au moins soit avec cette sortie de signaux analogiques à relier soit avec le circuit de diagnostic,
chaque canal de sortie de signaux analogiques comprenant un deuxième dispositif de sélection de liaison (101), qui est conçu pour relier, en accord avec le premier dispositif de sélection de liaison (115, 125), les deuxièmes dispositifs de raccordement (112, 122) sélectionnés de manière correspondante avec un dispositif de traitement (300) prévu pour le traitement précédent des signaux d'entrée du canal de sortie de signaux analogiques ou avec le circuit de diagnostic (130).

2. Circuit de sortie de signaux analogiques avec un premier nombre de canaux de sortie de signaux analogiques (100 ; 100') et au moins un circuit de diagnostic (130 ; 130'), où
- chaque canal de sortie de signaux analogiques (100 ; 100') est conçu pour envoyer, en réponse à des signaux d'entrée détectés, au niveau d'un deuxième nombre d'au moins deux sorties de signaux analogiques (201, 202, 201', 202'), des signaux de sortie analogiques ;
- chaque canal de sortie de signaux analogiques (100 ; 100') héberge chacun un troisième nombre de circuits de sortie de signaux analogiques (110, 120 ; 110', 120') et au moins un premier dispositif de sélection de liaison (115, 125) ;
- le troisième nombre étant au moins égal à trois et étant supérieur au maximum de un par rapport au deuxième nombre ;
- chaque circuit de sortie de signaux analogiques (110, 120 ; 110', 120') comprend un premier dispositif de raccordement (111, 121) et un deuxième dispositif de raccordement (112, 122) ;
- chacun des circuits de sortie de signaux analogiques (110, 120 ; 110', 120') d'un canal de sortie de signaux analogiques (100 ; 100') peut être relié, avec son premier dispositif de raccordement (111, 112), avec une sortie de signaux analogiques parmi le deuxième nombre de sorties de signaux analogiques (201, 202 ; 201', 202') pour la sortie d'un signal de sortie analogique, chacun des circuits de sortie de signaux analogiques (110, 120 ; 110', 120') d'un canal de sortie de signaux analogiques (100 ; 100') peut être relié successivement dans le temps, avec son premier dispositif de raccordement (111, 121), avec la même sortie de signaux analogiques parmi le deuxième nombre de sorties de signaux analogiques (201, 202 ; 201', 202') pour la sortie d'un signal de sortie analogique, et l'ensemble du troisième nombre de circuits de sortie de signaux analogiques (110, 120 ; 110', 120') d'un canal de sortie de signaux analogiques (100 ; 100') sont conçus pour sortir, en réponse à des signaux d'entrée correspondant entre eux, appliqués à leurs deuxièmes dispositifs de raccordement (112, 122), des signaux de sortie correspondant entre eux ;
- pour chaque canal de sortie de signaux analogiques (100 ; 100') pour la détection de signaux d'entrée et pour les sorties, en réponse aux signaux d'entrée détectés, des signaux de sortie analogiques, au niveau de sorties de signaux analogiques parmi le deuxième nombre de sorties analogiques, un circuit de sortie de signaux analogiques est sélectionné de manière alternée pour une période déterminée, pour ne pas être relié, avec son premier dispositif de raccordement, avec une sortie de signaux analogiques pour la sortie d'un signal de sortie analogique mais pour être utilisé à des fins de test et/ou de diagnostic et tous les autres, sauf un, du troisième nombre de circuits de sortie de signaux analogiques hébergés (110, 120 ; 110', 120') sont sélectionnés pour cette période prédéterminée, pour être relié, avec leurs premiers dispositifs de raccordement, avec certaines sorties de signaux analogiques parmi le deuxième nombre de sorties analogiques, pour la sortie de signaux de sortie analogiques et, en réponse au signal d'entrée détecté au niveau de son deuxième dispositif de raccordement, en tant que signaux de sortie, les signaux de sortie du canal de sortie de signaux analogiques, où le premier dispositif de sélection de liaison (115, 125) est conçu pour relier les premiers dispositifs de raccordement (111, 121) de tous les circuits de sortie de signaux analogiques hébergés (110, 120 ; 110', 120') en réponse à la sélection au moins soit avec une sortie de signaux analogiques à relier soit avec le circuit de diagnostic,
chaque canal de sortie de signaux analogiques comprenant un deuxième dispositif de sélection de liaison (101), qui est conçu pour relier, en accord avec le premier dispositif de sélection de liaison (115, 125), les deuxièmes dispositifs de raccordement (112, 122) sélectionnés de manière correspondante avec un dispositif de traitement (300) prévu pour le traitement précédent des signaux d'entrée du canal de sortie de signaux analogiques ou avec le circuit de diagnostic (130).

3. Circuit de sortie de signaux analogiques selon la revendication 1 ou 2, comportant un premier nombre d'au moins deux canaux de sortie de signaux analogiques (100, 100') .

4. Circuit de sortie de signaux analogiques selon la revendication 1 ou 2, comportant un premier nombre d'au moins deux canaux de sortie de signaux analogiques qui peuvent fonctionner de manière redondante ou être regroupés en un bloc de redondance.

5. Circuit de sortie de signaux analogiques selon la revendication 1, 2, 3 ou 4, où au moins un canal de sortie de signaux analogiques (100, 100') est également conçu pour le traitement de signaux numériques et chaque circuit de sortie de signaux analogiques (110, 120) de ce canal de sortie de signaux analogiques héberge un convertisseur numérique/analogique (116, 126), dont le raccordement de signaux numériques est connecté au deuxième dispositif de raccordement (112, 122) correspondant et dont le raccordement de signaux analogiques est connecté en direction du premier dispositif de sélection de liaison.

6. Circuit de sortie de signaux analogiques selon l'une des revendications précédentes, où le deuxième dispositif de sélection de liaison (101) est conçu de façon à ce qu'une liaison d'un deuxième dispositif de raccordement (112, 122) correspondant, pour la détection d'un signal d'entrée, également avec le circuit de diagnostic (130), puisse être sélectionnée avec au moins une tension de référence ou avec au moins une tension d'alimentation d'un dispositif périphérique.

7. Circuit de sortie de signaux analogiques selon l'une des revendications précédentes, le circuit de sortie de signaux analogiques hébergeant un étage pilote analogique (114, 124).

8. Circuit de sortie de signaux analogiques selon l'une des revendications précédentes, où au moins une sortie de signaux analogiques parmi le deuxième nombre de sorties de signaux analogiques (201, 202, 201', 202') comprend, en plus d'une borne de sortie (211, 212), un circuit de protection de sortie (221, 222) et/ou une unité d'adaptation de signaux passive (231, 232).

9. Circuit de sortie de signaux analogiques selon l'une des revendications précédentes, où le premier dispositif de sélection de liaison est conçu comme une unité de commutation analogique (115, 125), une telle unité de commutation analogique étant hébergée dans chaque circuit de sortie de signaux analogiques (110, 120).

10. Circuit de sortie de signaux analogiques selon l'une des revendications précédentes, qui est conçu pour faire fonctionner les circuits de sortie de signaux analogiques 110 et 120 lors de la commutation pour le test pendant une courte période avec le même signal d'entrée et pour comparer les résultats de sortie.
